(19) **Europäisches Patentamt**

**European Patent Office**

**Office européen des brevets**

(11) **EP 0 905 526 B1**

(12) **FASCICULE DE BREVET EUROPEEN**

(45) Date de publication et mention
de la délivrance du brevet:
**10.12.2003 Bulletin 2003/50**

(51) Int Cl.⁷: **G01S 7/40**, G01S 13/86,
G01B 11/26

(21) Numéro de dépôt: **98402311.9**

(22) Date de dépôt: **18.09.1998**

(54) **Dispositif de réglage de l'alignement d'un radar pour automobiles**

Ausrichtungsvorrichtung für Automobilradar

Car's radar alignment adjusting device

(84) Etats contractants désignés:
**BE DE ES FR GB IT SE**

(30) Priorité: **26.09.1997 FR 9711984**

(43) Date de publication de la demande:
**31.03.1999 Bulletin 1999/13**

(73) Titulaire: **Thales**
**75008 Paris (FR)**

(72) Inventeur: **Artis, Jean-Paul**
**94117 Arcueil Cedex (FR)**

(56) Documents cités:
**DE-A- 19 642 811**     **DE-A- 19 707 590**
**US-A- 4 150 897**      **US-A- 4 243 877**
**US-A- 5 313 213**      **US-A- 5 495 254**

## Description

La présente invention concerne un dispositif de réglage de l'alignement d'un radar pour automobiles, plus particulièrement pour l'alignement de l'axe radioélectrique du radar par rapport à une direction donnée relative au véhicule. Elle s'applique notamment pour l'alignement de l'axe radioélectrique du radar sur l'axe de poussée d'un véhicule.

Plusieurs types de radars peuvent équiper des véhicules automobiles. Parmi ceux-ci sont notamment connus les radars du type dit ACC selon l'expression anglo-saxonne « Automotive Cruise Control ». Un radar de ce type est destiné à permettre la régulation de l'allure des véhicules. Il détecte et localise le plus proche véhicule situé dans la voie du porteur. Pour cette application, le radar nécessite par exemple une portée de l'ordre de 150 mètres. Il doit en particulier être capable de détecter si un véhicule est situé dans la voie du porteur à cette distance. Il apparaît qu'en raison des autres sources d'imprécision en localisation angulaire, l'axe radioélectrique du radar doit être aligné en azimut avec la tangente à la trajectoire du véhicule porteur, qui correspond en fait à l'axe de poussée du véhicule. Cet alignement doit être réalisé à mieux que 0,2° environ, ce qui constitue un alignement très précis. Le réglage de cet alignement consiste à rendre parallèle l'axe radioélectrique du radar et l'axe de poussée du véhicule porteur. L'axe de poussée est la tangente à la trajectoire suivie par le véhicule lorsque le conducteur lâche le volant. Pour un véhicule ne possédant pas de défaut grave, notamment au niveau de la géométrie des trains de roulement ou de la qualité des pneumatiques, cette trajectoire est une droite ou une courbe de grand rayon de courbure. L'axe de poussée est en fait très sensiblement la bissectrice de l'angle formé par la projection horizontale des axes des roues arrières. L'axe radioélectrique est l'axe selon lequel le radar mesure un écart angulaire nul pour un objet situé sur cet axe.

Il est connu de régler l'alignement par une mesure d'écartométrie délivrée par le radar sur un signal issu d'un système répondeur actif ou passif. Un exemple de dispositif d'alignement utilisant le radar équipant le véhicule est notamment décrit dans la demande de brevet allemand DE 19707590 A1.

Le système répondeur actif ou passif est généralement situé à une relativement grande distance du radar, par exemple 20 mètres ou plus, et cela en environnement dégagé. Ce réglage est éventuellement affiné manuellement après analyse du comportement du radar par des essais sur route. Une telle méthode n'est pas facilement transposable dans le cadre d'une production de masse, telle que par exemple une production de radars de type ACC destinés à équiper à l'avenir un nombre croissant d'automobiles. Les principales raisons sont notamment les suivantes :

- le temps d'opération est très élevé ;

- il est nécessaire de disposer d'un système répondeur et surtout d'un espace libre, exempt de toute réflexion parasite sur une distance importante en face du poste de réglage ;
- la mise en oeuvre de matériel hyperfréquence est peu adapté au milieu industriel de production ou de maintenance automobile, en particulier elle nécessite une chambre particulière ne renvoyant pas d'échos pour effectuer un réglage en champ proche.

Toutes ces contraintes entraînent évidemment des coûts importants qui sont incompatibles d'une production automobile de masse où les coûts des produits finis sont justement très serrés. Par ailleurs, le manque de fiabilité et surtout le défaut de reproductibilité contribuent aussi à exclure la méthode précédente de ce type de production.

Il est également connu de régler l'alignement du radar en utilisant des moyens optiques. Un exemple de dispositif de réglage d'alignement utilisant un faisceau lumineux directement projeté sur un moyen de mesure est notamment décrit dans le brevet américain 5,313,213.

Le but de l'invention est notamment de permettre un réglage aisé de l'axe radar par rapport au porteur, et cela aussi bien sur une chaîne de production qu'en maintenance, par exemple en station service, tout en assurant une très bonne précision de réglage. A cet effet, l'invention a pour objet un dispositif de réglage de l'alignement de l'axe radioélectrique d'un radar porté par un véhicule, par rapport à une direction donnée relative au véhicule, caractérisé en ce qu'il comporte des moyens de mesure de la position du véhicule par rapport à une direction de référence, un miroir et des moyens de mesure de l'écart angulaire entre un rayon émis, selon une direction connue par rapport à l'axe radioélectrique, et son rayon réfléchi par le miroir, le réglage étant fonction de l'écart angulaire.

L'invention a également pour objet un dispositif de réglage de l'alignement de l'axe radioélectrique d'un radar porté par un véhicule, par rapport à une direction donnée relative au véhicule, caractérisé en ce qu'il comporte des moyens de mesure de la position du véhicule par rapport à une direction de référence, un miroir solidaire mécaniquement du radar et des moyens de mesure de l'écart angulaire entre un rayon émis et son rayon réfléchi par le miroir, l'écart angulaire étant fonction de l'angle entre le plan du miroir et la direction de référence.

L'invention a notamment pour principaux avantages qu'elle permet de réduire les temps d'opération, que le réglage peut être effectué par des personnes peu qualifiées, qu'elle est peu encombrante, qu'elle prend notamment peu de surface au sol, qu'elle permet une grande fiabilité et une très bonne reproductibilité, et qu'elle est économique.

D'autres caractéristiques et avantages de l'invention apparaîtront à l'aide de la description qui suit faite en regard de dessins annexés qui représentent :

- la figure 1, un premier mode de réalisation possible d'un dispositif selon l'invention ;
- la figure 2, un exemple de réalisation de moyens de mesure du réglage ;
- la figure 3, un autre exemple de réalisation de moyens de mesure du réglage ;

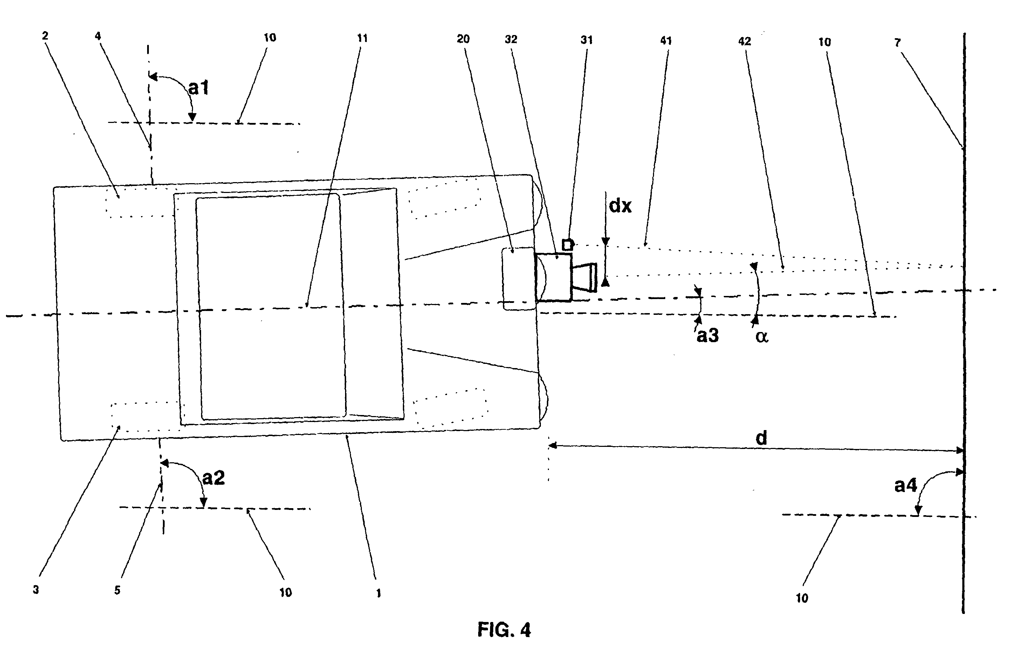

- la figure 4, un deuxième mode de réalisation possible d'un dispositif selon l'invention utilisant l'exemple de réalisation précité de moyens de mesure ;
- la figure 5, un troisième mode de réalisation possible d'un dispositif selon l'invention ;
- la figure 6, un exemple de réalisation possible d'un outillage pour rendre un miroir solidaire mécaniquement d'un radar.

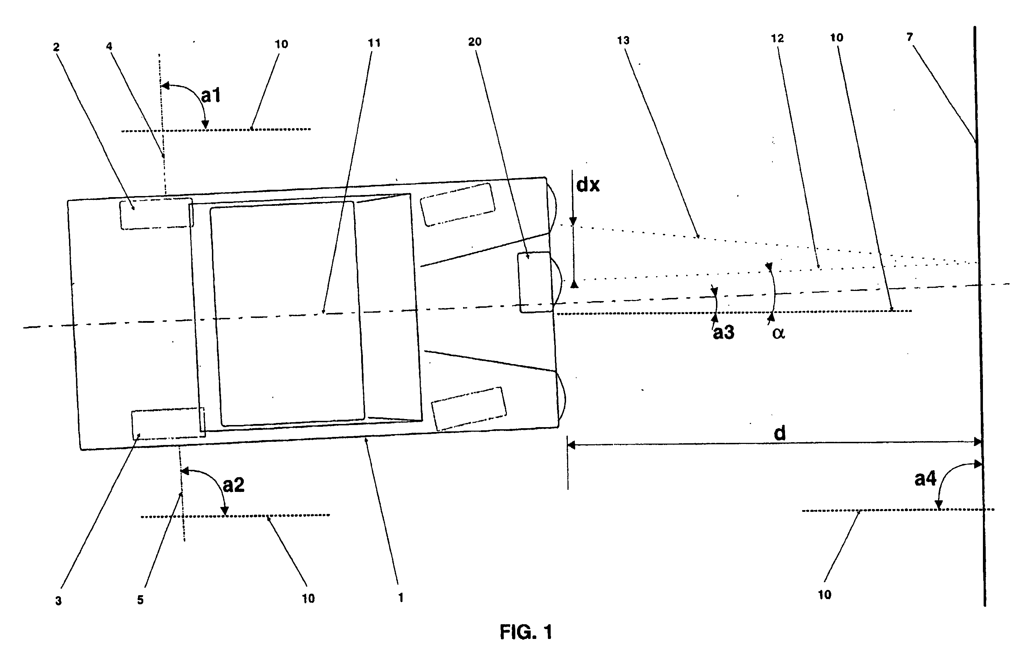

La figure 1 illustre un mode de réalisation possible d'un dispositif selon l'invention en présentant certaines de ses composantes. Le dispositif comporte des moyens de mesure de la position du véhicule 1, équipé d'un radar 20 situé par exemple à l'avant entre les deux phares, par rapport à une direction de référence 10. Ce véhicule peut être de tous types, de la voiture de tourisme au gros véhicule de transport. Ces moyens de mesure de la position du véhicule, bien connus, ne sont pas représentés. Ces moyens sont par exemple un banc pour régler le parallélisme des trains avant et arrière des véhicules en fabrication ou en maintenance, le véhicule étant monté sur ce banc. Ces moyens sont équipés de capteurs permettant de localiser précisément les bords des jantes des roues arrière 2, 3 du véhicule suivant un plan horizontal passant par les axes 4, 5 des roues. Ces moyens permettent donc de mesurer l'angle $a_1$ que fait l'axe 4 de la roue arrière gauche 2 avec la direction de référence 10 des moyens de mesure de positionnement. De même ils permettent de mesurer l'angle $a_2$ que fait l'axe 5 de la roue arrière droite 3 avec la direction 10 de référence. Etant donné que l'axe de poussée 11 du véhicule est la bissectrice des axes 4, 5 des roues arrières, la connaissance des angles $a_1$, $a_2$ que font ces derniers avec la direction de référence 10 permet de déterminer l'angle $a_3$ que fait l'axe de poussée 11 avec cette direction de référence 10. Cet angle $a_3$ peut être donné par la relation suivante, en fonction des angles $a_1$, $a_2$ des axes des roues :

$$a_3 = \frac{1}{2}(a_1 + a_2) - 90° \qquad (1)$$

Dans le cas d'utilisation d'un banc de mesure de parallélisme qui ordinairement ne délivre que des informations relatives aux angles que font les roues 2, 3 par rapport au véhicule 1, un capteur supplémentaire est par exemple ajouté pour donner l'angle dans le plan horizontal que fait l'axe 4, 5 d'une des roues par rapport à une référence fixe connue, dont la direction constitue la direction de référence 10 précitée.

Le dispositif selon l'invention comporte des moyens de mesure du réglage, c'est-à-dire des moyens pour mesurer la position angulaire de l'axe radioélectrique du radar 20 par rapport à cette direction de référence précitée 10. Ces moyens de mesure comprennent un miroir 7 et une source de rayonnement lumineux 12 dirigé vers ce miroir, ainsi que des moyens de mesure de l'écart angulaire entre le rayon émis 12 et le rayon réfléchi 13. Le miroir 7 est un miroir plan, installé en position verticale en face du véhicule 1, à une distance d comprise par exemple entre 1 et 2 mètres. Le miroir 7 fait un angle $a_4$ avec la direction de référence 10. Cet angle $a_4$ est par exemple voisin de 90°.

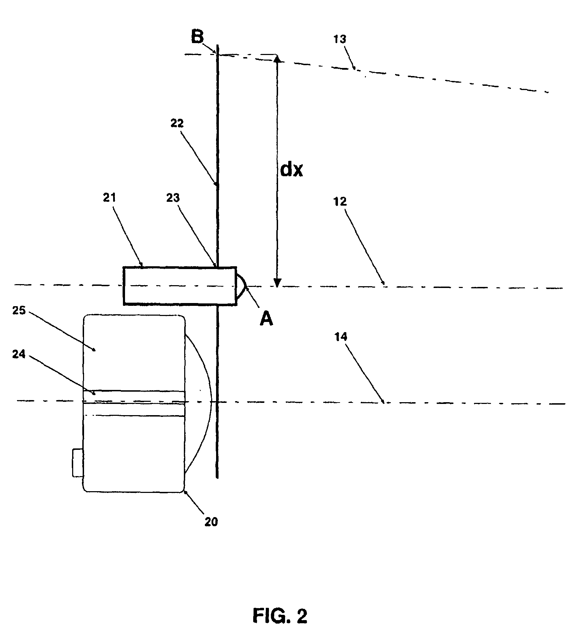

La figure 2 présente, par une vue dans le plan horizontal, un exemple de réalisation des moyens de mesure du réglage. Ils comportent une source lumineuse 21 et des moyens de mesure de l'écart angulaire 22 solidaires mécaniquement du radar 20. Ces éléments sont par exemple montés sur un châssis lui-même monté sur le radar 20, pour la durée du réglage. Le châssis comporte par exemple des évidements permettant l'accès à des vis de réglage du positionnement angulaire du radar sur le porteur. La source lumineuse 21 est par exemple un laser à faible divergence. La position de la source lumineuse est par exemple réglée de façon à ce que le rayon lumineux émis soit parallèle à l'axe radioélectrique 14 du radar. Si ce n'est pas le cas, la position angulaire entre ce dernier 14 et le rayon émis 12 est au moins connue. Les moyens de mesure de l'écart angulaire entre le rayon émis 12 et le rayon réfléchi 13 sont par exemple une plaque 22, par exemple non réfléchissante, située perpendiculaire à la direction du rayon émis 12. Cette plaque est munie, par exemple en son centre d'une ouverture 23 permettant le passage du faisceau laser. Cette plaque 22 comporte par exemple des graduations horizontales situées de part et d'autre de l'ouverture précitée 23. L'écart angulaire est déterminé à partir de la distance dx entre le point d'émission A du rayon lumineux 12 et le point d'impact B du rayon réfléchi 13 sur la plaque 22. La distance dx entre ces points répond à la relation suivante :

$$dx = 2d\,tg(\alpha + a_4 - 90°) \qquad (2)$$

où $\alpha$ est l'angle entre le rayon émis 12 et la direction de référence, d est la distance entre la plaque 22 et le miroir 7, et tg est la fonction tangente.

Les composantes d et $a_4$ de la relation (2) étant connues et fixés, la position du radar est alors réglée de façon à ce que la distance dx corresponde à un angle $\alpha$ égal à $a_3$ dans le cas où le rayon émis 12 est parallèle à l'axe radioélectrique 14. Etant donné que l'angle entre l'axe de poussée 11 et la direction de référence est aussi égal à $a_3$, il en résulte que l'axe radioélectrique 14 est parallèle à l'axe de poussée 11, ce qui est l'objectif du réglage. Si le rayon émis n'est pas parallèle à l'axe radioélectrique et fait donc un angle $\Delta a$ avec cet axe radioélectrique, le réglage est effectué jusqu'à ce que la distance dx corresponde à un angle $\alpha = a_3 + \Delta a$. La section verticale du miroir 7 peut être circulaire et de rayon sensiblement égal à la distance d entre le miroir 7 et le radar 20. Dans ce cas, le faisceau réfléchi 13 se trouve toujours sur les graduations de mesure de la plaque 22 quelle que soit la valeur du réglage en élévation du radar, ce qui facilite notamment l'opération de réglage.

Pour faciliter, mais aussi pour rendre plus rapide le réglage de l'alignement du radar, il est avantageux de pouvoir aisément et rapidement positionner la direction du faisceau émis 12 par rapport à l'axe radioélectrique 14 du radar. Selon l'invention, des moyens de positionnement sont prévus à cet effet. Ces moyens se composent par exemple d'un vé 24 sur une des faces 25 du boîtier du radar 20, par exemple sur la face supérieure lorsque le radar 20 est installé sur le véhicule 1. Ce vé guide par exemple le châssis sur lequel est monté la source d'émission 21. Le vé peut être remplacé par toute autre forme mécanique de référence permettant une reproduction de mise en place suffisamment précise et sans ambiguïté. L'angle que fait l'axe du vé avec l'axe radioélectrique du radar est déterminé avec précision, de préférence la direction des deux axes est confondue. La direction de l'axe du vé par rapport à l'axe radioélectrique est par exemple fixée lors de la fabrication du radar ou de sa mise au point par la connaissance de la direction de l'axe radioélectrique, qui peut être connue préalablement par les caractéristiques de fabrication du radar ou par ses premiers essais. Le châssis supportant la source lumineuse 21 a une forme telle que lorsqu'il est posé sur le radar 20, le faisceau lumineux émis 12 soit parallèle à la direction de l'axe du vé, et donc soit parallèle ou bien défini par rapport à l'axe radioélectrique 14 du radar 20. Dans le cas d'utilisation d'une autre forme que le vé, la forme du châssis est par exemple définie de façon à ce que l'axe du faisceau émis 12 soit parallèle à l'axe radioélectrique du radar. Dans tous les cas, les positions relatives de ces deux axes sont reproductibles et connues, et l'angle entre les directions de ces derniers bien défini.

La forme de référence 24 peut aussi par exemple être constituée de la face d'un support mécanique sur laquelle s'appuie le radar 20, ce support étant réglable par rapport au véhicule. La source mécanique 21 et les moyens de mesure de l'écart angulaire 22 sont alors montés sur le support du radar, eux-mêmes étant par exemple préalablement montés sur un châssis. C'est alors la position du support qui est réglée, et non pas directement celle du radar.

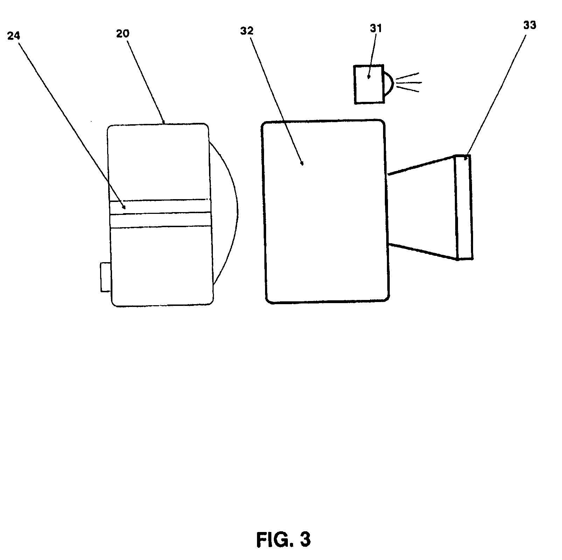

La figure 3 présente, par une vue dans le plan horizontal, un autre mode de réalisation possible d'un dispositif selon l'invention. Dans ce mode de réalisation, l'outillage monté sur le radar, ou sur son support mécanique éventuellement, est modifié par rapport au mode de réalisation précédent. L'outillage comporte une source lumineuse 31, qui n'est pas nécessairement un laser. Il comporte par ailleurs une caméra vidéo 32 située à côté et dont le centre de l'objectif 33 est situé dans le même plan horizontal que la source lumineuse 31. Un système d'exploitation de la vidéo permet de localiser l'image de la source lumineuse réfléchie par le miroir 7 et captée par la caméra 32. C'est-à-dire que ce système d'exploitation permet de mesurer la distance dx telle que définie relativement à la relation (2).

L'outillage est positionné par rapport au radar 20 ou à son support de la même façon que l'outillage de la figure 2. En particulier la forme de référence par rapport à laquelle est fixée la direction du rayonnement émis par la source lumineuse peut aussi être un vé. Le réglage s'effectue de la même façon que dans le mode de réalisation précédent, les mesures ne s'effectuant pas visuellement au moyen d'une graduation mais automatiquement au moyen d'un système d'exploitation vidéo d'une caméra 32.

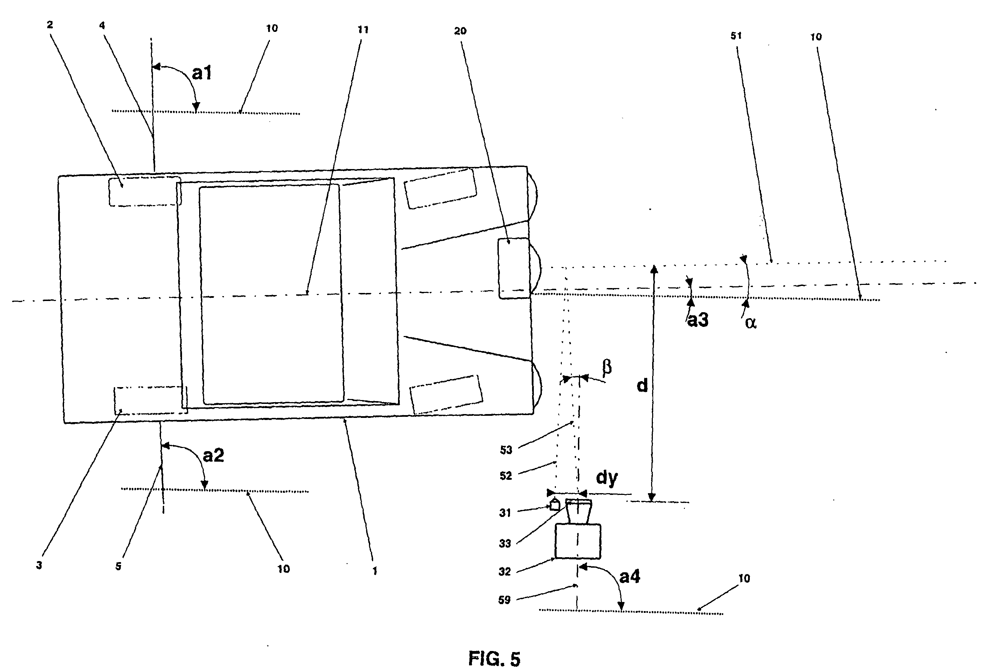

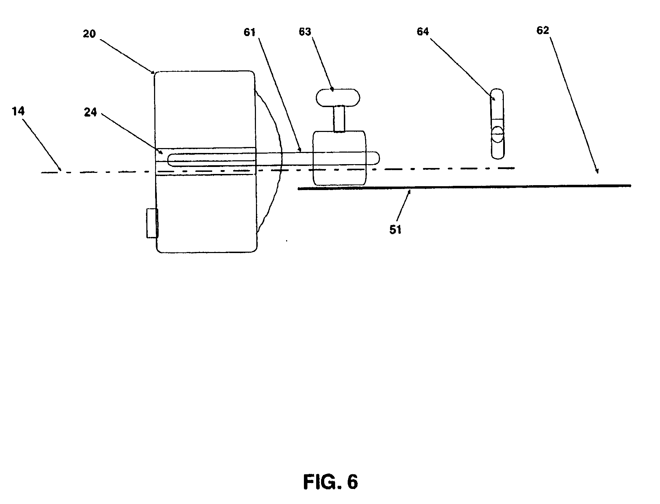

Les figures 5 et 6 présentent un autre mode de réalisation possible d'un dispositif selon l'invention. Dans ce mode de réalisation, un miroir 51 est monté sur le radar 20, ou éventuellement sur son support mécanique. Un miroir placé devant le radar n'est plus utilisé. Le miroir 51 est situé dans un plan vertical parallèle à la direction du vé du radar précédemment décrit, donc par exemple parallèle à l'axe radioélectrique du radar. En cas d'utilisation d'une autre forme de référence, l'outillage supportant le miroir 51 est tel, qu'une fois mis en place, la direction de l'axe radioélectrique du radar soit par exemple parallèle au plan du miroir.

La figure 6 illustre à titre d'exemple, par une représentation dans le plan horizontal, un exemple de réalisation possible d'un outillage pour monter le miroir 51 sur le radar 20, plus particulièrement pour le rendre solidaire mécaniquement du radar. Une tige 61 est rendue parallèle à l'axe du vé 24 du radar, par exemple le temps du réglage, l'axe étant lui-même parallèle à l'axe radioélectrique 14 du radar, par construction. La forme du vé facilite cette mise en parallèle, dans la mesure où la tige est positionnée à l'intérieur du vé 24 qui guide alors la direction de la tige 61. A cet effet, la tige 61 peut avoir une section triangulaire qui épouse parfaitement celle du vé. Le support 62 du miroir 51 peut être fixé à la tige 61 au moyen d'une molette 63, mécaniquement solidaire du support 62. Celle-ci immobilise le miroir après le réglage de la verticalité de ce dernier. Pour permettre ce réglage, la section de la tige 61 supportant la molette est par exemple adaptée aux stries de cette dernière. La verticalité du miroir peut par exemple être simplement réglée au moyen d'un niveau à bulle 64 ou de tout autre instrument adapté.

La figure 5 illustre la position des moyens 31, 32 de mesure du réglage. Ceux-ci ne sont plus fixés sur le radar ou son support, mais sur un bâti dont la position est connue par rapport à la direction 10 de référence. Dans le cas où les moyens de mesure comportent une source lumineuse 31 et une caméra 32, tels qu'illustrés par exemple relativement à la figure 3, l'axe 59 de l'objectif 33 de la caméra fait un angle connu $a_4$ avec la direction de référence. La source lumineuse émet un rayonnement 52 qui se réfléchit sur le miroir 51. La position de la source est réglée de telle sorte que le rayon émis 52 soit parallèle à l'axe 59 de l'objectif. L'angle entre ce rayon 52 et la direction de référence 10 est donc égale à l'angle $a_4$ précédemment défini. La source lumineuse et l'objectif sont situés dans un même plan vertical.

Si dy représente la distance entre le point de départ du rayon émis 52 et le point où la caméra capte le rayon réfléchi 53, cette distance dy est donnée par la relation suivante :

$$dy = 2d\ tg(\beta + a_4 - 90°) \qquad (3)$$

où $\beta$ est l'angle entre l'axe de l'objectif et le faisceau 53 réfléchi par le miroir 51, d la distance entre ce dernier et la source lumineuse 31 et $a_4$ l'angle précédemment défini.

Cet angle $\beta$ est par ailleurs aussi égal à l'angle $\alpha$ entre le plan du miroir et la direction de référence 10. En conséquence, la position du radar 20, qui commande par ailleurs l'orientation du miroir 51 est réglée de façon à ce que la distance dy corresponde à un angle $\beta$, et donc un angle $\alpha$ égal à l'angle $a_3$ qui est l'angle, précédemment défini, entre l'axe de poussée 11 de la voiture et la direction de référence 10. Etant donné que le plan vertical est parallèle à l'axe radioélectrique 14 du radar, il en résulte alors que cet axe est parallèle à l'axe de poussée 11 de la voiture.

L'outillage de mesure 31, 32 utilisé relativement à la figure 5 peut être remplacé par un outillage du type de celui décrit relativement à la figure 2. Dans ce cas, l'angle entre la direction de référence 10 et le rayon émis par la source 21, un rayon laser par exemple, est égal à l'angle $a_4$ précédemment défini.

Le miroir 51 peut par exemple être remplacé par un prisme droit à section principale isocèle dont l'arête est horizontale et dont la base, dirigée vers l'outillage de mesure, est par exemple sensiblement verticale, ce qui supprime notamment la nécessité d'un réglage de verticalité.

Un dispositif selon l'invention est facilement applicable à une chaîne de fabrication en série car d'une part il ne nécessite que très peu de place au sol en face du véhicule et d'autre part les outillages de mesure peuvent rester à poste fixe pendant l'avance de la chaîne, notamment dans le cas d'un dispositif selon la figure 5. Par ailleurs, dans le cas d'utilisation d'un outillage de mesure à base de caméra, l'information étant disponible sous forme électronique, il est possible d'y coupler directement un tournevis électrique présenté par un opérateur ou un robot sur le radar. Cela permet notamment une automatisation totale du processus de réglage en grande série. Le réglage par un dispositif selon l'invention, s'il n'est pas entièrement automatisé peut être réalisé par un opérateur peu qualifié, ce dernier n'ayant juste par exemple qu'à agir sur la position du radar, plus particulièrement sur ses vis de réglage, jusqu'à ce que l'impact du rayon réfléchi sur la graduation de la plaque 22 indique une valeur donnée ou que l'image de la source 31 fournie par la caméra 32 occupe une position définie. Enfin, les moyens utilisés, outre qu'ils sont peu encombrants sont de faibles coûts, tout en permettant des mesures fiables et reproductibles, car notamment indépendantes de l'environnement extérieur.

Le dispositif selon l'invention a été décrit pour un alignement de l'axe radioélectrique du radar sur l'axe de poussée de son véhicule porteur, il peut cependant s'appliquer aussi pour tout alignement par rapport à une direction donnée relative au véhicule porteur, cette direction étant définie selon une direction de référence.

Pour faciliter les mesures, les miroirs ont été décrits comme étant situés dans un plan vertical, mais des mesures d'écart angulaire dans le plan horizontal, plus précisément dans un plan perpendiculaire aux rayons émis ou à l'axe radioélectrique, pourraient être réalisées même si les miroirs ne sont pas verticaux, notamment par projection des rayons ou de leurs points d'impact dans un plan horizontal.

De préférence, les rayons émis sont des rayons lumineux, notamment pour des facilités de réalisation et de mise au point, mais des conditions particulières de réglage pourraient très bien faire appel à des rayons autres que lumineux.

Enfin, il est à noter que le réglage a été décrit à titre d'exemple pour un radar orienté vers l'avant du véhicule, cependant un dispositif selon l'invention peut effectuer un réglage pour un radar orienté selon tout autre direction.

**Revendications**

1. Dispositif de réglage de l'alignement de l'axe radioélectrique (14) d'un radar (20) porté par un véhicule (1), par rapport à une direction donnée (11) relative au véhicule, comportant des moyens de mesure de la position du véhicule par rapport à une direction de référence (10), un miroir (7) et des moyens (22, 32, 33) de mesure solidaires du radar permettant de mesurer de l'écart angulaire entre un rayon (12) émis et son rayon réfléchi (13) par le miroir (7), l'écart angulaire étant fonction de l'angle ($\alpha$) entre le rayon émis (12) et la direction de référence (10), **caractérisé en ce que** le rayon (12) est émis par une source d'émission (21) distincte du radar, selon une direction connue par rapport à l'axe radioélectrique du radar.

2. Dispositif selon la revendication 1, **caractérisé en**

**ce qu'**il comporte une forme de référence (24) solidaire du radar par rapport à laquelle est positionnée la source d'émission (21) du rayon (12).

3. Dispositif selon la revendication 2, **caractérisé en ce que** la forme de référence est un vé (24) qui guide un châssis sur lequel est monté la source d'émission (21).

4. Dispositif selon l'une quelconque des revendications 2 ou 3, **caractérisé en ce que** la forme de référence (24) est orientée de telle façon que la direction du rayon émis (12) soit connue.

5. Dispositif selon la revendication 4, **caractérisé en ce que** la forme de référence (24) est orientée de telle façon que la direction du rayon émis (12) soit parallèle à l'axe radioélectrique (14) du radar.

6. Dispositif de réglage de l'alignement de l'axe radioélectrique (14) d'un radar (20) porté par un véhicule (1), par rapport à une direction donnée (11) relative au véhicule, **caractérisé en ce qu'**il comporte des moyens de mesure de la position du véhicule par rapport à une direction de référence (10), un miroir (51) solidaire mécaniquement du radar (20) et des moyens de mesure (22, 32, 33) de l'écart angulaire (dy) entre un rayon (52) émis et son rayon réfléchi (53) par le miroir (51), l'écart angulaire (dy) étant fonction de l'angle (a) entre le plan du miroir (51) et la direction de référence (10).

7. Dispositif selon la revendication 6, **caractérisé en ce qu'**il comporte une forme de référence (24) solidaire du radar par rapport à laquelle est positionnée le miroir (51).

8. Dispositif selon la revendication 7, **caractérisé en ce que** la forme de référence est un vé (24) qui guide un support (61, 62) sur lequel est monté le miroir (51).

9. Dispositif selon l'une quelconque des revendications 7 ou 8, **caractérisé en ce que** la forme de référence (24) est orientée de telle façon que le plan du miroir (51) soit parallèle à l'axe radioélectrique (14) du radar.

10. Dispositif selon l'une quelconque des revendications précédentes, **caractérisé en ce que** les moyens de mesure de l'écart angulaire comportent une plaque (22) située perpendiculairement au rayon émis (12, 52), l'écart angulaire étant déterminé à partir de la distance entre le point (A) d'émission et le point (B) d'impact du rayon réfléchi (13, 53) sur la plaque.

11. Dispositif selon l'une quelconque des revendications 1 à 9, **caractérisé en ce que** les moyens de mesure de l'écart angulaire comportent une caméra vidéo (32) dont l'objectif est situé dans le même plan que la source d'émission (21, 31), un système d'exploitation mesurant la distance (dy) entre la source (21, 31) et le point d'impact du rayon réfléchi (13, 53).

12. Dispositif selon l'une quelconque des revendications précédentes, **caractérisé en ce que** la direction donnée (11) est la direction de l'axe de poussée (14) du véhicule (1).

13. Dispositif selon la revendication 12, **caractérisé en ce que** l'axe de poussée (14) étant défini comme la bissectrice de l'angle formé par les axes (4, 5) des roues arrières (2, 3), sa direction est définie par la déterminations des angles ($a_1$, $a_2$) des axes par rapport à la direction de référence par les moyens de mesure de la position du véhicules (1).

14. Dispositif selon l'une quelconque des revendications précédentes, **caractérisé en ce que** les moyens de mesure de la position du véhicule (1) par rapport à la direction de référence (10) sont un banc pour régler le parallélisme des trains avant et arrière du véhicule, le véhicule étant monté sur ce banc.

15. Dispositif selon la revendication 14, **caractérisé en ce que** les moyens de mesure de la position du véhicule comportent un capteur supplémentaire pour donner l'angle que fait l'axe (4, 5) d'une des roues par rapport à la direction de référence.

16. Dispositif selon l'une quelconque des revendications 2 à 5 et 7 à 9, **caractérisé en ce que** la forme de référence (24) est constituée de la face d'un support mécanique sur laquelle s'appuie le radar (20), ce support étant réglable par rapport au véhicule, la position du support étant réglée et non directement celle du radar (20).

17. Dispositif selon l'une quelconque des revendications 6 à 16, **caractérisé en ce** la fonction du miroir (51) est réalisée par un prisme droit à section principale isocèle dont l'arête est horizontale et la base est dirigée vers les moyens de mesure de l'écart angulaire (22, 32, 33).

18. Dispositif selon la revendication 17, **caractérisé en ce que** la base du prisme est sensiblement verticale.

**Claims**

1. Device for adjusting the alignment of the radio axis (14) of a radar (20) carried by a vehicle (1) with respect to a given direction (11) relative to the vehicle, comprising means for measuring the position of the vehicle with respect to a reference direction (10), a mirror (7) and measurement means (22, 32, 33) integral with the radar making it possible to measure the angular deviation between a ray (12) emitted and its ray reflected (13) by the mirror (7), the angular deviation being dependent on the angle ($\alpha$) between the emitted ray (12) and the reference direction (10), **characterized in that** the ray (12) is emitted by an emission source (21) separate from the radar, along a known direction with respect to the radio axis of the radar.

2. Device according to Claim 1, **characterized in that** it comprises a reference shape (24) integral with the radar and with respect to which the source of emission (21) of the ray (12) is positioned.

3. Device according to Claim 2, **characterized in that** the reference shape is a vee (24) which guides a chassis on which the emission source (21) is mounted.

4. Device according to any one of Claims 2 or 3, **characterized in that** the reference shape (24) is oriented in such a way that the direction of the emitted ray (12) is known.

5. Device according to Claim 4, **characterized in that** the reference shape (24) is oriented in such a way that the direction of the emitted ray (12) is parallel to the radio axis (14) of the radar.

6. Device for adjusting the alignment of the radio axis (14) of a radar (20) carried by a vehicle (1) with respect to a given direction (11) relative to the vehicle, **characterized in that** it comprises means for measuring the position of the vehicle with respect to a reference direction (10), a mirror (51) mechanically integral with the radar (20) and means (22, 32, 33) for measuring the angular deviation (dy) between a ray (52) emitted and its ray reflected (53) by the mirror (51), the angular deviation (dy) being dependent on the angle ($\alpha$) between the plane of the mirror (51) and the reference direction (10).

7. Device according to Claim 6, **characterized in that** it comprises a reference shape (24) integral with the radar and with respect to which the mirror (51) is positioned.

8. Device according to Claim 7, **characterized in that** the reference shape is a vee (24) which guides a support (61, 62) on which the mirror (51) is mounted.

9. Device according to any one of Claims 7 or 8, **characterized in that** the reference shape (24) is oriented in such a way that the plane of the mirror (51) is parallel to the radio axis (14) of the radar.

10. Device according to any one of the preceding claims, **characterized in that** the means for measuring the angular deviation comprise a plate (22) situated perpendicularly to the emitted ray (12, 52), the angular deviation being determined from the distance between the point (A) of emission and the point (B) of impact of the reflected ray (13, 53) on the plate.

11. Device according to any one of Claims 1 to 9, **characterized in that** the means for measuring the angular deviation comprise a video camera (32) whose objective is situated in the same plane as the emission source (21, 31), a utilization system measuring the distance (dy) between the source (21, 31) and the point of impact of the reflected ray (13, 53).

12. Device according to any one of the preceding claims, **characterized in that** the given direction (11) is the direction of the axis of thrust (14) of the vehicle (1).

13. Device according to Claim 12, **characterized in that** the thrust axis (14) being defined as the bisector of the angle formed by the axes (4, 5) of the rear wheels (2, 3), its direction is defined by the determination of the angles ($a_1$, $a_2$) of the axes with respect to the reference direction by the means for measuring the position of the vehicle (1).

14. Device according to any one of the preceding claims, **characterized in that** the means for measuring the position of the vehicle (1) with respect to the reference direction (10) are a rig for adjusting the parallelism of the front and rear axle assemblies of the vehicle, the vehicle being mounted on this rig.

15. Device according to Claim 14, **characterized in that** the means for measuring the position of the vehicle comprise an additional sensor for giving the angle made by the axis (4, 5) of one of the wheels with respect to the reference direction.

16. Device according to any one of Claims 2 to 5 and 7 to 9, **characterized in that** the reference shape (24) consists of that face of a mechanical support on which the radar (21) bears, this support being adjustable with respect to the vehicle, the position of the support being adjusted and not directly the position of the radar (20) .

17. Device according to any one of Claims 6 to 16, **characterized in that** the function of the mirror (51) is carried out by a right prism with isosceles principal cross section whose edge is horizontal and whose base is directed towards the means for measuring the angular deviation (22, 32, 33).

18. Device according to Claim 17, **characterized in that** the base of the prism is substantially vertical.

**Patentansprüche**

1. Vorrichtung zur Regelung der Ausrichtung der radioelektrischen Achse (14) eines von einem Fahrzeug (1) getragenen Radars (20) bezüglich einer gegebenen Richtung (11) relativ zu dem Fahrzeug, welche Mittel zum Messen der Position des Fahrzeugs bezüglich einer Referenzrichtung (10), einen Spiegel (7) und Meßmittel (22, 32, 33) aufweist, die mit dem Radar fest verbunden sind und mit denen der Phasenverschiebungswinkel zwischen einem emittierten Strahl (12) und seinem von dem Spiegel (7) reflektierten Strahl (13) gemessen werden kann, wobei der Phasenverschiebungswinkel eine Funktion des Winkels ($\alpha$) zwischen dem emittierten Strahl (12) und der Referenzrichtung (10) ist, **dadurch gekennzeichnet, daß** der Strahl (12) von einer von dem Radar getrennten Emissionsquelle (21) entlang einer bekannten Richtung bezüglich der radioelektrischen Achse des Radars emittiert wird.

2. Vorrichtung nach Anspruch 1, **dadurch gekennzeichnet, daß** sie eine mit dem Radar fest verbundene Referenzform (24) aufweist, bezüglich welcher die Emissionsquelle (21) des Strahls (12) positioniert ist.

3. Vorrichtung nach Anspruch 2, **dadurch gekennzeichnet, daß** die Referenzform ein Prisma (24) ist, das einen Rahmen führt, an welchem die Emissionsquelle (21) angebracht ist.

4. Vorrichtung nach einem der Ansprüche 2 oder 3, **dadurch gekennzeichnet, daß** die Referenzform (24) derart orientiert ist, daß die Richtung des emittierten Strahls (12) bekannt ist.

5. Vorrichtung nach Anspruch 4, **dadurch gekennzeichnet, daß** die Referenzform (24) derart orientiert ist, daß die Richtung des emittierten Strahls (12) zu der radioelektrischen Achse (14) des Radars parallel ist.

6. Vorrichtung zur Regelung der Ausrichtung der radioelektrischen Achse (14) eines von einem Fahrzeug (1) getragenen Radars (20) bezüglich einer gegebenen Richtung (11) relativ zu dem Fahrzeug, **dadurch gekennzeichnet, daß** sie Mittel zum Messen der Position des Fahrzeugs bezüglich einer Referenzrichtung (10), einen Spiegel (51), der mechanisch mit dem Radar (20) fest verbunden ist, und Meßmittel (22, 32, 33) für den Phasenverschiebungswinkel (dy) zwischen einem emittierten Strahl (52) und seinem von dem Spiegel (51) reflektierten Strahl (53) aufweist, wobei der Phasenverschiebungswinkel (dy) eine Funktion des Winkels ($\alpha$) zwischen der Ebene des Spiegels (51) und der Referenzrichtung (10) ist.

7. Vorrichtung nach Anspruch 6, **dadurch gekennzeichnet, daß** sie eine mit dem Radar fest verbundene Referenzform (24) aufweist, bezüglich welcher der Spiegel (51) positioniert ist.

8. Vorrichtung nach Anspruch 7, **dadurch gekennzeichnet, daß** die Referenzform ein Prisma (24) ist, das einen Träger (61, 62) führt, an welchem der Spiegel (51) angebracht ist.

9. Vorrichtung nach einem der Ansprüche 7 oder 8, **dadurch gekennzeichnet, daß** die Referenzform (24) derart orientiert ist, daß die Ebene des Spiegels (51) zu der radioelektrischen Achse (14) des Radars parallel ist.

10. Vorrichtung nach einem der vorhergehenden Ansprüche, **dadurch gekennzeichnet, daß** die Mittel zum Messen des Phasenverschiebungswinkels eine Platte (22) aufweisen, die senkrecht zu dem emittierten Strahl (12, 52) liegt, wobei der Phasenverschiebungswinkel ausgehend von dem Abstand zwischen dem Emissionspunkt (A) und dem Auftreffpunkt (B) des reflektierten Strahls (13, 53) auf der Platte bestimmt wird.

11. Vorrichtung nach einem der Ansprüche 1 bis 9, **dadurch gekennzeichnet, daß** die Mittel zum Messen des Phasenverschiebungswinkels eine Videokamera (32) aufweisen, deren Objektiv in der gleichen Ebene wie die Emissionsquelle (21, 31) liegt, wobei ein Betriebssystem den Abstand (dy) zwischen der Quelle (21, 31) und dem Auftreffpunkt des reflektierten Strahls (13, 53) mißt.

12. Vorrichtung nach einem der vorhergehenden Ansprüche, **dadurch gekennzeichnet, daß** die gegebene Richtung (11) die Richtung der Schubachse (14) des Fahrzeugs (1) ist.

13. Vorrichtung nach Anspruch 12, **dadurch gekennzeichnet, daß**, da die Schubachse (14) als die Winkelhalbierende des von den Achsen (4, 5) der hinteren Räder (2, 3) gebildeten Winkels definiert ist, ihre Richtung durch die Bestimmung der Winkel ($a_1$, $a_2$) der Achsen bezüglich der Referenzrichtung durch die Mittel zum Messen der Position des Fahr-

**EP 0 905 526 B1**

zeugs (1) definiert ist.

**14.** Vorrichtung nach einem der vorhergehenden Ansprüche, **dadurch gekennzeichnet, daß** die Mittel zum Messen der Position des Fahrzeugs (1) bezüglich der Referenzrichtung (10) eine Bank zum Regeln der Parallelität des vorderen und des hinteren Fahrgestells des Fahrzeugs sind, wobei das Fahrzeug auf dieser Bank angebracht ist.

**15.** Vorrichtung nach Anspruch 14, **dadurch gekennzeichnet, daß** die Mittel zum Messen der Position des Fahrzeugs einen zusätzlichen Sensor aufweisen, um den Winkel anzugeben, den die Achse (4, 5) eines der Räder bezüglich der Referenzrichtung bildet.

**16.** Vorrichtung nach einem der Ansprüche 2 bis 5 und 7 bis 9, **dadurch gekennzeichnet, daß** die Referenzform (24) aus der Seite eines mechanischen Trägers besteht, an den das Radar (20) anliegt, wobei dieser Träger bezüglich des Fahrzeugs regelbar ist, wobei die Position des Trägers und nicht direkt diejenige des Radars (20) geregelt wird.

**17.** Vorrichtung nach einem der Ansprüche 6 bis 16, **dadurch gekennzeichnet, daß** die Funktion des Spiegels (51) durch ein gerades Prisma mit gleichschenkeligem Hauptschnitt realisiert ist, dessen Scheitel horizontal und dessen Basis zu den Mitteln (22, 32, 33) zum Messen des Phasenverschiebungswinkels gerichtet ist.

**18.** Vorrichtung nach Anspruch 17, **dadurch gekennzeichnet, daß** die Basis des Prismas im wesentlichen vertikal ist.

FIG. 1

EP 0 905 526 B1

**FIG. 2**

EP 0 905 526 B1

**FIG. 3**

FIG. 4

FIG. 5

**FIG. 6**

EP 0 905 526 B1